(19) Europäisches Patentamt
European Patent Office
Office européen des brevets

(11) EP 4 403 587 A1

(12) EUROPEAN PATENT APPLICATION
published in accordance with Art. 153(4) EPC

(43) Date of publication:
**24.07.2024 Bulletin 2024/30**

(21) Application number: **22869971.6**

(22) Date of filing: **13.09.2022**

(51) International Patent Classification (IPC):
***C08G 18/42*** *(2006.01)* ***C08G 18/30*** *(2006.01)*

(52) Cooperative Patent Classification (CPC):
**C08G 18/30; C08G 18/42; C08G 18/65**

(86) International application number:
**PCT/JP2022/034247**

(87) International publication number:
**WO 2023/042824 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.09.2021 JP 2021149597**

(71) Applicant: **Daicel Corporation**
**Osaka 530-0011 (JP)**

(72) Inventors:
- **KAMADA, Takeru**
  **Tokyo 108-8230 (JP)**
- **TAKAOKA, Shinnosuke**
  **Tokyo 108-8230 (JP)**
- **WATANABE, Jun**
  **Tokyo 108-8230 (JP)**

(74) Representative: **Grünecker Patent- und Rechtsanwälte**
**PartG mbB**
**Leopoldstraße 4**
**80802 München (DE)**

# (54) COMPOSITION FOR POLYURETHANE ELASTOMER, AND POLYURETHANE ELASTOMER

(57) Provided is a composition capable of forming a polyurethane elastomer that is soft and excellent in elongation and restorability by curing. The composition for a polyurethane elastomer of the present disclosure contains: a polyol compound (A) containing a compound having three or more groups represented by Formula (1) below per molecule and having an average molecular weight per hydroxyl group of 1000 or greater and 2000 or less; and a polyisocyanate compound (B). In Formula (1) below, n represents an integer of 2 to 6, and m represents an integer of 6 to 20.

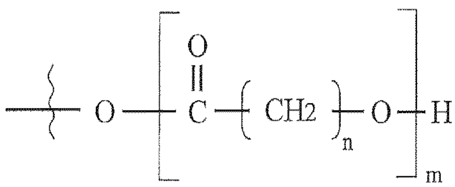
(1)

EP 4 403 587 A1

## Description

### Technical Field

The present disclosure relates to a composition for a polyurethane elastomer, and a polyurethane elastomer obtained using the composition for a polyurethane elastomer. The present application claims priority to JP 2021-149597 filed in Japan on September 14, 2021, the content of which is incorporated herein by reference.

### Background Art

A polyurethane elastomer is widely used in various industrial rolls, sealing materials, conveyor belts, medical devices, shoe soles, tires, shock absorbers, and sports and leisure goods.

The polyurethane elastomer is obtained by thermally curing a composition for a polyurethane elastomer, the composition containing a polyol compound, a polyisocyanate compound, and a curing agent. In recent years, there is a demand for a polyurethane elastomer with a softer texture and it has been known that the elastomer is achievable by the following methods [1] and [2].

[1] A method of adding a plasticizer, such as diisononyl phthalate
[2] A method of using a polyol compound with increased molecular weight

However, the method [1] poses a problem in that the plasticizer in the polyurethane elastomer tends to bleed out in summer.

Regarding the method [2], Patent Document 1 describes using a modified polytetramethylene ether glycol having a number average molecular weight of 1500 to 5000.

### Citation List

### Patent Document

Patent Document 1: JP H07-242725 A

### Summary of Invention

### Technical Problem

However, a polyurethane elastomer obtained using a polyether polyol such as a modified polytetramethylene ether glycol has a disadvantage of low mechanical strength with a tensile strength of approximately 2 MPa.

The present inventors have found that using a high molecular weight diol such as the modified polytetramethylene ether glycol softens the resulting polyurethane elastomer and facilitates the elongation of the polyurethane elastomer (i.e., improves the elongation), but a soft segment derived from the high molecular weight diol is easily crystallized due to a decrease in crosslinking density, making it difficult for the elongated elastomer to be restored to its original state (i.e., the restorability decreases).

Thus, an object of the present disclosure is to provide a composition capable of forming a polyurethane elastomer that is soft and excellent in elongation and restorability by curing.

Another object of the present disclosure is to provide a polyurethane elastomer that is soft and excellent in elongation and restorability.

### Solution to Problem

As a result of diligent research to solve the above problems, the present inventors have found that using a polyol compound having an average molecular weight per hydroxyl group of 1000 or greater and 2000 or less, the polyol compound obtained by ring-opening addition polymerization of a lactone with a trihydric or higher polyol, allows the resulting polyurethane elastomer to be soft and have high elongation and restorability. The present disclosure has been completed based on these findings.

That is, the present disclosure provides a composition for a polyurethane elastomer, the composition containing:

a polyol compound (A) containing a compound having three or more groups represented by Formula (1) below per molecule and having an average molecular weight per hydroxyl group of 1000 or greater and 2000 or less; and

a polyisocyanate compound (B):

[Chem. 1]

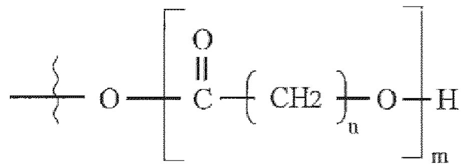

(1)

(wherein n represents an integer of 2 to 6, and m represents an integer of 6 to 20).

The present disclosure also provides the composition for a polyurethane elastomer, wherein the polyol compound (A) is a compound represented by Formula (a) or Formula (b) below:

[Chem. 2]

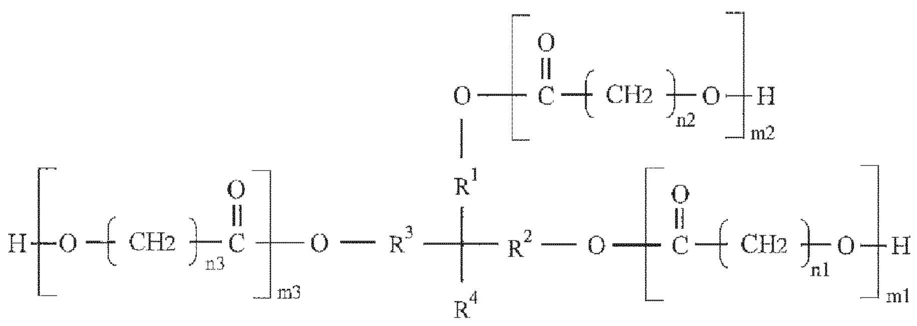

(a)

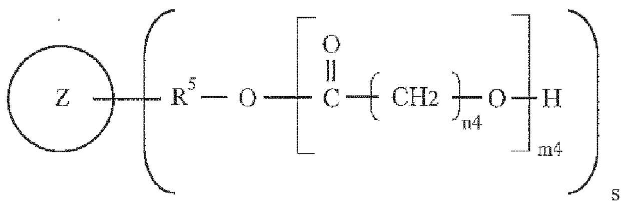

(b)

(wherein n1 to n4 are identical to or different from one another and represent an integer of 3 to 6; m1 to m4 are identical to or different from one another and represent an integer of 6 to 20; $R^1$ to $R^3$ and $R^5$ are identical to or different from one another and represent a single bond or a divalent hydrocarbon group; $R^4$ represents a hydrogen atom, a hydroxyl group, or a monovalent hydrocarbon group that may have a group represented by Formula (1); and ring Z represents a residue obtained by removal of s hydrogen atoms from a structural formula of an alicyclic hydrocarbon ring, an aromatic hydrocarbon ring, or a heterocyclic ring, and s represents an integer of 3 or more).

The present disclosure also provides the composition for a polyurethane elastomer, the composition containing a compound (C) having a molecular weight of 200 or less and having two or more groups reactive with an isocyanate group, wherein a content of the compound (C) is from 1 to 10 parts by weight per 100 parts by weight of the polyol compound (A).

The present disclosure also provides a polyurethane elastomer having a soft segment containing an addition polymerization product of:

a polyol compound (A) having three or more groups represented by Formula (1) below per molecule and having an average molecular weight per hydroxyl group of 1000 or greater and 2000 or less; and

a polyisocyanate compound (B):

[Chem. 3]

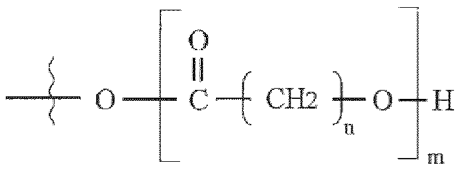

(1)

(wherein n represents an integer of 2 to 6, and m represents an integer of 6 to 20).

The present disclosure also provides the polyurethane elastomer further having a hard segment containing an addition polymerization product of:

a polyisocyanate compound (B); and
a compound (C) having a molecular weight of 200 or less and having two or more groups reactive with an isocyanate group.

The present disclosure also provides the polyurethane elastomer, wherein the polyurethane elastomer has no melting point, or when the polyurethane elastomer has a melting point, an enthalpy of fusion determined by performing DSC measurement under conditions below is 15 [J/g] or less at the time of a second temperature increase:
DSC measurement conditions:

rate of temperature increase and decrease: 5°C/min; and
temperature increase and decrease program: the temperature is decreased from room temperature to -80°C, kept at -80°C for 1 minute, then increased to 220°C, kept at 220°C for 1 minute, then decreased to -80°C, kept at -80°C for 1 minute, and then increased to 220°C.

The present disclosure also provides the polyurethane elastomer having a Shore A hardness of 75 or less under conditions of 23°C and 50% Rh.
The present disclosure also provides the polyurethane elastomer having a compression set determined by a method below of 10% or less:
method of calculating compression set:
a right circular cylindrical test piece having a thickness of 12.5 ± 0.5 mm and a diameter of 29.0 ± 0.5 mm is prepared from the polyurethane elastomer; the test piece is subjected to a test in which the test piece is held in a state of being pressed to reduce the thickness by 25% in an atmosphere of 70°C for 22 hours; and the compression set is calculated from a formula below:

compression set = [(test piece thickness before test - test piece thickness after test) / (test piece thickness before test - 9.38)] x 100.

Advantageous Effects of Invention

The composition for a polyurethane elastomer of the present disclosure contains, as a polyol compound, the polyol compound (A) having three or more groups represented by Formula (1) above per molecule and having an average molecular weight per hydroxyl group of 1000 or more and 2000 or less. Thus, a polyurethane elastomer obtained by curing the composition is soft. In the polyurethane elastomer, the molecular chain length of the soft segment is limited by the polyol compound (A). This prevents crystallization of the soft segment and provides excellent elongation, restorability, and mechanical strength.
The composition for a polyurethane elastomer can be widely used in various industrial rolls, sealing materials, conveyor belts, medical devices, shoe soles, tires, shock absorbers, and sports and leisure goods.

Description of Embodiments

Composition for polyurethane elastomer

The composition for a polyurethane elastomer of the present disclosure is a composition that forms a polyurethane elastomer by thermal curing and contains a polyol compound (A) and a polyisocyanate compound (B).

Polyol compound (A)

The polyol compound (A) is a polyol compound having three or more groups represented by Formula (1) below per molecule and having an average molecular weight per hydroxyl group of 1000 or greater and 2000 or less:

[Chem. 4]

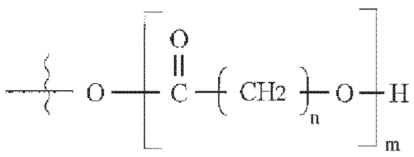

(1)

(wherein n represents an integer of 2 to 6, and m represents an integer of 6 to 20).

The polyol compound (A) has three or more and preferably from three to six hydroxyl groups. In addition, the polyol compound (A) has three or more and preferably from three to six groups represented by Formula (1).

The polyol compound (A) is preferably a compound having a tertiary carbon atom or a quaternary carbon atom or a compound having a cyclic skeleton, and particularly preferably a compound represented by Formula (a) below or a compound represented by Formula (b) below, from the viewpoint that the compound can prevent a decrease in crosslinking density and this in turn can prevent crystallization of a soft segment.

[Chem. 5]

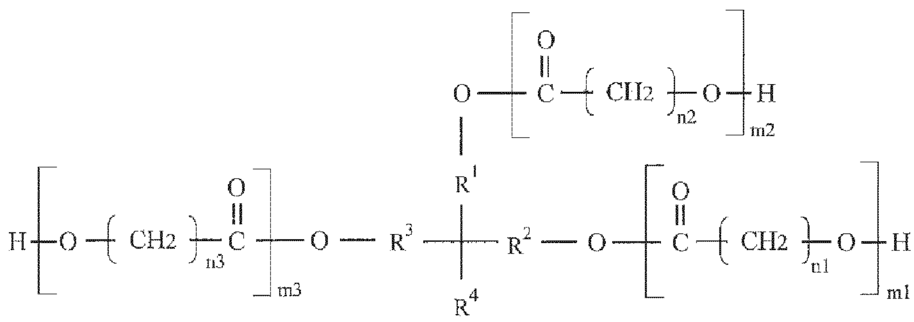

(a)

(wherein n1 to n3 are identical to or different from one another and represent an integer of 3 to 6; m1 to m3 are identical to or different from one another and represent an integer of 6 to 20; $R^1$ to $R^3$ are identical to or different from one another and represent a single bond or a divalent hydrocarbon group; and $R^4$ represents a hydrogen atom, a hydroxyl group, or a monovalent hydrocarbon group that may have a group represented by Formula (1).)

[Chem. 6]

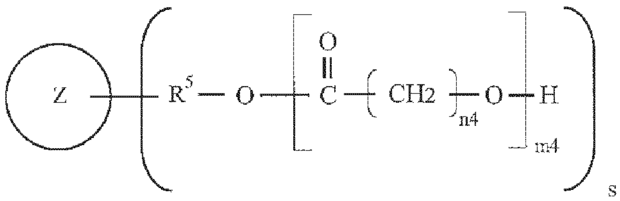

(b)

(wherein n4 represents an integer of 3 to 6; m4 represents an integer of 6 to 20; $R^5$ represents a single bond or a divalent hydrocarbon group; and ring Z represents a residue obtained by removal of s hydrogen atoms from a structural formula of an alicyclic hydrocarbon ring, an aromatic hydrocarbon ring, or a heterocyclic ring, and s represents an integer of 3 or more.)

Examples of the divalent hydrocarbon group include linear or branched alkylene groups having from 1 to 18 carbons, such as a methylene group, a methylmethylene group, a dimethylmethylene group, an ethylene group, a propylene group, and a trimethylene group; and cycloalkylene groups (including cycloalkylidene groups) having from 3 to 18 carbons, such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Among these, the divalent hydrocarbon group is preferably an alkylene group, particularly preferably an alkylene group having from 1 to 18 carbons, most preferably an alkylene group having from 1 to 5 carbons, and especially preferably a linear alkylene group having from 1 to 5 carbons.

Examples of the monovalent hydrocarbon group include a monovalent aliphatic hydrocarbon group, a monovalent alicyclic hydrocarbon group, a monovalent aromatic hydrocarbon group, and a monovalent group in which two or more of these hydrocarbon groups are bound through a single bond or a linking group [e.g., a carbonyl group (-CO-), an ether bond (-O-), a thioether bond (-S-), or an ester bond (-COO-)].

Among these, the monovalent hydrocarbon group is preferably a monovalent aliphatic hydrocarbon group. The monovalent aliphatic hydrocarbon group is preferably an aliphatic hydrocarbon group having from 1 to 20 carbons (= $C_{1-20}$), and examples thereof include alkyl groups having approximately from 1 to 20 (preferably from 1 to 10 and particularly preferably 1 to 3) carbons, such as a methyl group, an ethyl group, a propyl group, an isopropyl group, a butyl group, an isobutyl group, an s-butyl group, a t-butyl group, a pentyl group, a hexyl group, a decyl group, and a dodecyl group; and alkenyl groups having approximately from 2 to 20 (preferably from 2 to 10 and particularly preferably from 2 to 3) carbons, such as a vinyl group, an allyl group, and a 1-butenyl group.

The monovalent hydrocarbon group may have a group represented by Formula (1) as a substituent or may have a substituent other than the group represented by Formula (1). Examples of another substituent include a hydroxyl group, oxo groups, and substituted oxy groups (e.g., $C_{1-5}$ alkoxy groups, $C_{6-12}$ aryloxy groups, $C_{7-16}$ aralkyloxy groups, and $C_{1-5}$ acyloxy groups). The monovalent hydrocarbon group that may have a group represented by Formula (1) above may be simply a group represented by Formula (1).

The alicyclic hydrocarbon ring constituting the ring Z is preferably an alicyclic hydrocarbon ring having from 3 to 20 carbons, and examples thereof include cycloalkanes having from 3 to 20 carbons (preferably from 3 to 15 carbons and particularly preferably from 5 to 8 carbons), such as cyclopropane, cyclobutane, cyclopentane, cyclohexane, and cyclooctane; cycloalkenes having from 3 to 20 carbons (preferably from 3 to 15 carbons and particularly preferably from 5 to 8 carbons), such as cyclopentene and cyclohexene; and bridged rings, such as perhydronaphthalene, norbornane, norbornene, adamantane, tricyclo[5.2.1.$0^{2,6}$]decane, and tetracyclo[4.4.0.$1^{2,5}$.$1^{7,10}$]dodecan-4-en.

The aromatic hydrocarbon ring constituting the ring Z is preferably a $C_{6-14}$ (in particular $C_{6-10}$) aromatic hydrocarbon ring, and examples thereof include benzene and naphthalene.

The alicyclic hydrocarbon ring or the aromatic hydrocarbon ring may have any type of substituent [e.g., an oxo group, a substituted oxy group (e.g., an alkoxy group, an aryloxy group, an aralkyloxy group, or an acyloxy group), or a carboxyl group].

The heterocyclic ring constituting the ring Z includes an aromatic heterocyclic ring and a non-aromatic heterocyclic ring. Examples of such a heterocyclic ring include 3 to 10-membered rings (preferably 4 to 6-membered rings) having carbon atoms and at least one heteroatom (e.g., an oxygen atom, a sulfur atom, or a nitrogen atom) as ring-constituting atoms, and condensed rings of these. Specific examples include heterocyclic rings containing an oxygen atom as a heteroatom (e.g., 3-membered rings, such as an oxirane ring; 4-membered rings, such as an oxetane ring; 5-membered rings, such as a furan ring, a tetrahydrofuran ring, an oxazole ring, an isoxazole ring, and a γ-butyrolactone ring; 6-membered rings, such as a 4-oxo-4H-pyran ring, a tetrahydropyran ring, and a morpholine ring; condensed rings,

such as a benzofuran ring, an isobenzofuran ring, a 4-oxo-4H-chromene ring, a chroman ring, and an isochroman ring; and bridged rings, such as a 3-oxatricyclo[4.3.1.1$^{4,8}$]undecan-2-one ring and a 3-oxatricyclo[4.2.1.0$^{4,8}$]nonan-2-one ring), heterocyclic rings containing a sulfur atom as a heteroatom (e.g., 5-membered rings, such as a thiophene ring, a thiazole ring, an isothiazole ring, and a thiadiazole ring; 6-membered rings, such as a 4-oxo-4H-thiopyran ring; and condensed rings, such as a benzothiophene ring), and heterocyclic rings containing a nitrogen atom as a heteroatom (e.g., 5-membered rings, such as a pyrrole ring, a pyrrolidine ring, a pyrazole ring, an imidazole ring, and a triazole ring; 6-membered rings, such as an isocyanuric ring, a pyridine ring, a pyridazine ring, a pyrimidine ring, a pyrazine ring, a piperidine ring, and a piperazine ring; and condensed rings, such as an indole ring, an indoline ring, a quinoline ring, an acridine ring, a naphthyridine ring, a quinazoline ring, and a purine ring). In addition to the substituent that may be possessed by the alicyclic hydrocarbon ring or the aromatic hydrocarbon ring, the heterocyclic group may have a $C_{1-4}$ alkyl group (e.g., a methyl group or an ethyl group), a $C_{3-20}$ cycloalkyl group, or a $C_{6-14}$ aryl group (e.g., a phenyl group or a naphthyl group).

The above-described s represents an integer of 3 or more and is preferably an integer of 3 to 6.

The average molecular weight per hydroxyl group of the polyol compound (A) is 1000 or greater and 2000 or less. In terms of preventing crystallization of a soft segment for producing a polyurethane elastomer with high restorability, the upper limit value of the average molecular weight is preferably 1900, particularly preferably 1700, and especially preferably 1600. In terms of producing a polyurethane elastomer with high elongation and mechanical strength, the lower limit value is preferably 1100, more preferably 1200, particularly preferably 1300, most preferably 1400, and especially preferably 1500.

The polyol compound (A) has a number average molecular weight of, for example, 4000 to 8000. In terms of preventing crystallization of a soft segment for producing a polyurethane elastomer with high restorability, the upper limit value of the average molecular weight is preferably 7600, particularly preferably 6800, and especially preferably 6400. In terms of producing a polyurethane elastomer with high elongation and mechanical strength, the lower limit value is preferably 4400, more preferably 4800, particularly preferably 5200, most preferably 5500, and especially preferably 6000.

The molecular weight dispersity (Mw/Mn) of the polyol compound (A) is, for example, from 1.1 to 1.6.

The polyol compound (A) can be produced by using a polyol having three or more hydroxyl groups as an initiator and allowing the initiator to trigger ring-opening polymerization of a 5- to 8-membered ring lactone.

The polyol is, for example, a polyol having a tertiary carbon atom or a quaternary carbon atom, or a polyol having a cyclic skeleton, and has three or more and preferably from three to five hydroxyl groups.

The molecular weight of the polyol is, for example, from 95 to 200, preferably from 100 to 150, and particularly preferably from 100 to 140.

Examples of the polyol include trimethylolpropane, pentaerythritol, tris-(2-hydroxyethyl) isocyanurate, and dipentaerythritol. These may be used alone or in combination of two or more types.

Examples of the lactone include γ-butyrolactone, 6-valerolactone, ε-caprolactone, and ζ-enanthlactone. These may be used alone or in combination of two or more types.

Controlling the amount of the lactone to be used can adjust the average molecular weight per hydroxyl group of the resulting polyol compound (A). The amount of the lactone to be used is, for example, from 20 to 80 mol per mol of the initiator. From the viewpoint of preventing crystallization of a soft segment for producing a polyurethane elastomer with high restorability, the upper limit value of the amount of the lactone to be used is preferably 70 mol, more preferably 65 mol, and particularly preferably 60 mol. From the viewpoint of producing a polyurethane elastomer with high elongation and mechanical strength, the lower limit value of the amount of the lactone to be used is preferably 30 mol, more preferably 35 mol, particularly preferably 45 mol, and most preferably 50 mol.

The ring-opening polymerization reaction of the lactone is preferably carried out in the presence of a tin compound as a catalyst. Examples of the tin compound include tin(II) octylate, dibutyltin dilaurate, tin(II) chloride, tin(IV) chloride, tin(II) bromide, tin(II) iodide, dibutyltin dichloride, butyltin trichloride, monobutyltin oxide, dibutyltin oxide, monobutyltin tris(2-ethylhexyl mercaptoacetate), monobutyltin tris(isooctyl mercaptoacetate), monobutyltin triacetate, and monobutyltin tris(2-ethylhexanoate). These may be used alone or in combination of two or more types.

The amount of the tin compound to be used (or the total amount of two or more tin compounds to be used in combination) is, for example, from 5 to 30 ppm, preferably from 10 to 25 ppm, particularly preferably from 15 to 25 relative to the total amount of the lactone and the initiator. Using the tin compound in the above range is preferred from the viewpoint of producing a polyol compound (A) with a narrow molecular weight distribution.

The reaction temperature in the ring-opening polymerization of the lactone is preferably 120°C or higher and particularly preferably from 120 to 210°C. The reaction time is, for example, from 3 to 30 hours, and the reaction pressure is, for example, from 0.7 to 1.5 atm. The reaction atmosphere is not particularly limited as long as the reaction is not inhibited, but an inert gas atmosphere, such as a nitrogen atmosphere or an argon atmosphere, is preferred.

The ring-opening polymerization of the lactone can be performed by employing any polymerization method of bulk polymerization, solution polymerization, and suspension polymerization. The solvent to be used in the solution polymerization is preferably, for example, an aromatic hydrocarbon, such as toluene or xylene, since it has a relatively

high boiling point and is inactive in the reaction. The solvent is desirably a substantially anhydrous solvent.

The polymerization reaction can be carried out by any method, such as a batch method, a semi-batch method, or a continuous method. After completion of the reaction, the resulting reaction products can be separated and purified by separation and purification means, such as filtration, concentration, distillation, extraction, crystallization, recrystallization, adsorption, or column chromatography, or by a combination of these means.

Polyisocyanate compound (B)

Examples of the polyisocyanate compound (B) include diisocyanate compounds, such as 2,4-tolylene diisocyanate, 2,6-tolylene diisocyanate, 1,3-xylene diisocyanate, 1,4-xylene diisocyanate, xylylene diisocyanate, 1,5-naphthalene diisocyanate, m-phenylene diisocyanate, p-phenylene diisocyanate, diphenylmethane diisocyanate, 4,4'-diphenylmethane diisocyanate, 4,4'-dibenzyl diisocyanate, isophorone diisocyanate, hexamethylene diisocyanate, dicyclohexylmethane diisocyanate, 2,2,4-trimethylhexamethylene diisocyanate, and 2,4,4-trimethylhexamethylene diisocyanate; diisocyanate compounds obtained by hydrogenation of an aromatic isocyanate compound among the above diisocyanate compounds (e.g., diisocyanate compounds, such as hydrogenated xylylene diisocyanate and hydrogenated diphenylmethane diisocyanate); trivalent or higher isocyanate compounds, such as triphenylmethane triisocyanate and dimethylenetriphenyl triisocyanate; and multimerized polyisocyanates obtained by multimerization of such an isocyanate compound. These may be used alone or in combination of two or more types.

The polyisocyanate compound (B) is preferably a diisocyanate compound and particularly preferably an aromatic diisocyanate compound.

Regarding the content of the polyisocyanate compound (B), the mole ratio of the isocyanate group contained in the polyisocyanate compound (B) to the hydroxyl group contained in the polyol compound (A) (when a curing agent described below is contained, the mole ratio of the isocyanate group to the total amount of the hydroxyl group contained in the polyol compound (A) and a group reactive with the isocyanate group and contained in the curing agent [NCO group/(OH group + group reactive with isocyanate group)] is, for example, preferably in a range of 1/3 to 3/3 and more preferably in a range of 1/2 to 2/1.

Additional component

The above-described composition may contain one additional component or two or more additional components in addition to the polyol compound (A) and the polyisocyanate compound (B). Examples of the additional component include a chain extender, a crosslinker, a curing agent, a flame retardant, a plasticizer, an antioxidant, an ultraviolet absorber, a colorant, and a filler.

Examples of the chain extender include a compound (C) that is a compound having two or more groups reactive with an isocyanate group and having a low molecular weight (the molecular weight is, e.g., 200 or less, preferably 150 or less, particularly preferably 120 or less, especially preferably 100 or less, and the lower limit value of the molecular weight is, for example, 50).

In the case where the composition contains the compound (C), the resulting polyurethane elastomer has a hard segment containing an addition polymerization product of the polyisocyanate compound (B) and the compound (C) together with the soft segment containing an addition polymerization product of the polyol compound (A) and the polyisocyanate compound (B). Adjusting the proportions of the soft segment and the hard segment can control elongation, restorability, and mechanical strength.

The compound (C) has two or more and preferably from two to three groups reactive with an isocyanate group.

Examples of the group reactive with an isocyanate group in the compound (C) include a hydroxyl group and an amino group.

Examples of the compound (C) include polyols, polyamines, and amino alcohols.

Examples of the polyol include aliphatic polyols having from 2 to 10 carbons, such as ethylene glycol, 1,4-butanediol, 1,5-pentanediol, 1,6-hexamethylenediol, glycerin, and trimethylolpropane.

Examples of the polyamine include aliphatic polyamines, such as ethylenediamine, propylenediamine, 1,3-diaminopentane, and 2-methyl-1,5-pentanediamine; and alicyclic polyamines, such as 1-amino-3-aminomethyl-3,5,5-trimethylcyclohexane and 4,4'-dicyclohexylmethanediamine.

Examples of the amino alcohol include N-methylethanolamine, diethanolamine, and diisopropanolamine.

The compound (C) is preferably a polyol, particularly preferably a diol, and particularly preferably an aliphatic diol having from 2 to 10 carbons (particularly from 2 to 6 carbons).

The content of the compound (C) is, for example, from 1 to 10 parts by weight, preferably from 2 to 8 parts by weight, and particularly preferably from 3 to 7 parts by weight per 100 parts by weight of the polyol compound (A).

The composition may contain an additional polyol besides the polyol compound (A) and the polyol as the compound (C), and the content of the additional polyol is, for example, 30 wt.% or less, preferably 20 wt.% or less,

particularly preferably 10 wt.% or less, most preferably 5 wt.% or less, and especially preferably 1 wt.% or less, relative to the total amount of the polyols contained in the composition. The polyol is a compound having two or more hydroxyl groups per molecule.

Polyurethane elastomer

A polyurethane elastomer of the present disclosure has a soft segment composed of an addition polymerization product of:

a polyol compound (A) having three or more groups represented by Formula (1) per molecule and having an average molecular weight per hydroxyl group of 1000 or greater and 2000 or less, and
a polyisocyanate compound (B).

The polyurethane elastomer is obtained, for example, by curing the composition for a polyurethane elastomer. The composition for a polyurethane elastomer is cured by heating at a temperature of, for example, 80 to 150°C. The heating time is, for example, from 5 to 24 hours.
In the case where the composition for a polyurethane elastomer contains the compound (C), the polyurethane elastomer has a hard segment containing an addition polymerization product of the polyisocyanate compound (B) and the compound (C) together with the soft segment. The polyurethane elastomer may contain the soft segment and the hard segment randomly or regularly. That is, the polyurethane elastomer may be a random copolymer or a block copolymer containing the soft segment and the hard segment.
The polyurethane elastomer may contain an additional component besides the soft segment and the hard segment, but the proportion of the total weight of the soft segment and the hard segment in the entire weight of the polyurethane elastomer is, for example, 50 wt.% or more, preferably 60 wt.% or more, more preferably 70 wt.% or more, even more preferably 80 wt.% or more, particularly preferably 90 wt.% or more, most preferably 95 wt.% or more, and especially preferably 99 wt.% or more. The upper limit value of the proportion is 100 wt.%.
The soft segment of the polyurethane elastomer contains an addition polymerization product of the polyol compound (A) and the polyisocyanate compound (B). Thus, the soft segment has no melting point, or even when the soft segment has a melting point, the melting point is 30°C or lower (e.g., in a range of 20 to 30°C). This prevents crystallization and thus prevents a decrease in restorability due to the crystallization.
The melting point is a melting peak temperature detected when the temperature is decreased from room temperature (25°C) to -80°C at a rate of 5°C/min, then kept at -80°C for 1 minute, increased to 220°C at a rate of 5°C/min, then kept at 220°C for 1 minute, decreased to -80°C at a rate of 5°C/min, then kept at -80°C for 1 minute, and then increased again to 220°C at a rate of 5°C/min using a differential scanning calorimeter (DSC) under normal pressure. In the present disclosure, the phrase "has no melting point" means that a clear melting peak of the polyol compound (A) is not observed when DSC measurement is performed under the above conditions.
In the case where the polyurethane elastomer has a melting point, the enthalpy of fusion at the time of the second temperature increase when the DSC measurement is performed under the above conditions is, for example, 15 [J/g] or less, preferably 10 [J/g] or less, and particularly preferably 5 [J/g] or less.
The polyurethane elastomer has a moderate hardness, and has a Shore A hardness of, for example, 75 or less and preferably 70 or less. The lower limit value of the Shore A hardness is, for example, 60. The Shore A hardness is a value under conditions of 23°C and 50% Rh.
The polyurethane elastomer has an appropriate hardness, and has an elastic modulus of, for example, 3 to 10 MPa, preferably 3 to 6 MPa, and particularly preferably 3 to 5 MPa. The elastic modulus is determined by a method described in Examples.
The polyurethane elastomer has excellent restorability and has a compression set determined by the following method of, for example, 10% or less, preferably 5 or less, particularly preferably less than 3, and most preferably 2 or less.
Method of calculating compression set:
A right circular cylindrical test piece having a thickness of 12.5 $\pm$ 0.5 mm and a diameter of 29.0 $\pm$ 0.5 mm is prepared from the polyurethane elastomer, the test piece is subjected to a test in which the test piece is held in a state of being pressed to reduce the thickness by 25% in an atmosphere of 70°C for 22 hours, and the compression set is calculated from a formula described below. Test piece thickness after test is the thickness of the test piece after completion of the pressing test; i.e., after release of the pressing.

Compression set = [(test piece before test - test piece thickness after test) / (test piece thickness test - 9.38)] x 100

The polyurethane elastomer has excellent restorability and has an elastic recovery rate of, for example, 35%

or more, preferably 45% or more, more preferably 50% or more, particularly preferably 70% or more, and most preferably 80% or more. The elastic recovery rate is determined by a method described in Examples.

The polyurethane elastomer has excellent mechanical strength and has a tensile strength of, for example, 3 MPa or more, preferably 5 MPa or more, and particularly preferably 10 MPa or more. The tensile strength is determined by a method described in Examples.

The polyurethane elastomer has excellent elongation and has a tensile elongation of, for example, 100% or more, preferably 130% or more, particularly preferably 150% or more, and most preferably 180% or more. The tensile elongation is, for example, 500% or less. The tensile elongation is determined by a method described in Examples.

The configurations and their combinations of the present disclosure described above are merely an example, and addition, omission, substitution, and modification of the configurations may be appropriately made without departing from the gist of the present disclosure. In addition, the present disclosure is not limited by the embodiments and is limited only by the claims.

## Examples

The present disclosure will next be described in more detail by way of Examples, but the present disclosure is not limited to the Examples.

For the measurement of the molecular weight of the resulting compound, the number average molecular weight (Mn) was determined by comparison with a polystyrene standard under the following measurement conditions.

### Measurement conditions

Measurement instrument: a high-speed GPC instrument "HLC-8220 GPC", available from Tosoh Corporation
Mobile phase: tetrahydrofuran

### Preparation Example 1

Under a nitrogen gas atmosphere, 3.5 parts by weight of pentaerythritol as an initiator, 100 parts by weight of ε-caprolactone (an amount corresponding to 33.9 mol per mol of the initiator), and 0.002 parts by weight of tin(II) octylate were placed in a five-necked flask equipped with a reflux condenser, a thermometer, an air gas inlet tube, and a stirrer, and then the internal temperature was increased to 170°C.

The concentration of ε-caprolactone was determined to be less than 1.0% by gas chromatographic analysis, and then the mixture was cooled to complete the reaction. As a result, a polyol compound (A1) was prepared. The number average molecular weight (Mn) of the resulting polyol compound (A1) was 4000.

### Preparation Example 2

A polyol compound (A2) was prepared in the same manner as in Preparation Example 1 except that the amount of pentaerythritol used was changed to 2.7 parts by weight (an amount corresponding to 43.5 mol per mol of the initiator). The number average molecular weight (Mn) of the resulting polyol compound (A2) was 5100.

### Preparation Example 3

A polyol compound (A3) was prepared in the same manner as in Preparation Example 1 except that the amount of pentaerythritol used was changed to 2.2 parts by weight (an amount corresponding to 54.9 mol per mol of the initiator). The number average molecular weight (Mn) of the resulting polyol compound (A3) was 6400.

### Preparation Example 4

A polyol compound (A4) was prepared in the same manner as in Preparation Example 1 except that the amount of pentaerythritol used was changed to 1.9 parts by weight (an amount corresponding to 61.9 mol per mol of the initiator). The number average molecular weight (Mn) of the resulting polyol compound (A4) was 7200.

### Preparation Example 5

A polyol compound (A5) was prepared in the same manner as in Preparation Example 1 except that the amount

of pentaerythritol used was changed to 1.7 parts by weight (an amount corresponding to 68.9 mol per mol of the initiator). The number average molecular weight (Mn) of the resulting polyol compound (A5) was 8000.

Examples 1 to 5 and Comparative Examples 1 and 2

Each of the polyols, a polyisocyanate, and a chain extender were placed in a cup container as shown in the table below, and the materials were mixed and defoamed using Shinku Awatori Rentaro, to produce a composition.
The NCO/OH (mole ratio) in the composition was 1.00.
The resulting composition was poured into a mold having a thickness of 2 mm, a width of 13 mm, and a length of 20 mm and cured by heating with an oven at 80°C for 2 hours and then at 120°C for 16 hours. The composition was further cured in a constant temperature and humidity environment of 23°C and 50% RH for 48 hours. Thus, a polyurethane elastomer was produced.
The resulting polyurethane elastomer was evaluated for the following properties.

Color tone and texture

In an environment of 23°C and 50% Rh, the appearance of the polyurethane elastomer was visually observed to determine the color tone. In addition, the texture by fingers was determined.

Shore A hardness

In an environment of 23°C and 50% Rh, the hardness of the polyurethane elastomer was measured using Hardness Tester type A (available from Shimadzu Corporation).

Prevention of soft segment crystallization

The temperature of the polyurethane elastomer and the melting point and enthalpy of fusion of a soft segment were measured using a DSC (AUTO Q2000 MDSC, available from TA Instruments) by changing the temperature according to the following program, to determine presence or absence of a melting point. In the case of the presence of a melting point, the enthalpy of fusion at the time of a second temperature increase was determined.
Rate of temperature increase and decrease: 5°C/min
Temperature increase and decrease cycle: the temperature was decreased from room temperature to -80°C, kept at -80°C for 1 minute, then increased to 220°C, kept at 220°C for 1 minute, then decreased to -80°C, kept at -80°C for 1 minute, and then increased to 220°C.

Tensile physical properties

Tensile strength, tensile elongation, and elastic modulus were measured under the following conditions using Tensilon universal testing machine (RTC-1350A, available from A&D Company, Limited).

Measurement conditions

Test piece: the polyurethane elastomer was cut into a No. 3 dumbbell test piece (100 mm in length x 25 mm in width x 2 mm in thickness), and the test piece was used.

Measurement environment: 23°C and 50% RH
Distance between marked lines: 20 mm
Tensile test speed: 500 mm/min

Elastic recovery rate

A stretch test was performed for three cycles under the following conditions using Tensilon universal testing machine (RTC-1350A, available from A&D Company, Limited), and the elastic recovery rate was calculated from the following formula.

$$\text{Elastic recovery rate} = (300 - \text{elongation at shrinkage in third cycle})/300 \times 100$$

Test conditions

Test piece: the polyurethane elastomer was cut into a No. 3 dumbbell test piece (100 mm in length x 25 mm in width x 2 mm in thickness), and the test piece was used.

Test environment: 23°C and 50% RH
Distance between chucks: 20 mm
Stretch test speed: 50 mm/min
Maximum elongation: 300%
The elongation was kept constant at 0% or 300% for 10 minutes.

Compression set

A test of compressing a test piece was performed under the following conditions using a compression set tester (Kobunshi Keiki Co., Ltd.), and the compression set was calculated from the following formula.

Compression set = [(test piece thickness before set - test piece thickness after test) / (test piece thickness before test - 9.38)] x 100

Test conditions

Test piece: the polyurethane elastomer was cut into a right circular cylindrical test piece having a thickness of 12.5 $\pm$ 0.5 mm and a diameter of 29.0 $\pm$ 0.5 mm, and the test piece was used.

Compression rate: 25%
Compression time: 22 hours
Test environment temperature: 70°C

[Table 1]

Table 1

| | | Average molecular weight per hydroxyl group | Example 1 | Example 2 | Example 3 | Example 4 | Example 5 | Comparative Example 1 | Comparative Example 2 |
|---|---|---|---|---|---|---|---|---|---|
| Polyol | A1 | 1000 | 100 | - | - | - | - | - | - |
| | A2 | 1275 | - | 100 | - | - | - | - | - |
| | A3 | 1600 | - | - | 100 | - | - | - | - |
| | A4 | 1800 | - | - | - | 100 | - | - | - |
| | A5 | 2000 | - | - | - | - | 100 | - | - |
| | A6 | 2000 | - | - | - | - | - | 100 | - |
| | A7 | 1000 | - | - | - | - | - | - | 100 |
| Polyisocyanate | B | | 26 | 23 | 21 | 20 | 19 | 19 | 26 |
| Chain extender | C | | 5 | 5 | 5 | 5 | 5 | 5 | 5 |
| Color tone | | | Transparent | Transparent | Transparent | Transparent | Slightly whitened | Whitened | Transparent |
| Texture | | | Rubber texture | Rubber texture | Rubber texture | Rubber texture | Rubber texture | Crystallization texture | Rubber texture |
| Shore A hardness | | | 68 | 69 | 68 | 68 | 73 | 92 | 65 |
| Prevention of soft segment crystallization | Melting point [°C] | | Not detected | Not detected | Not detected | 24 | 27 | 35 | Not detected |
| | Enthalpy of fusion [J/g] | | Not detected | Not detected | Not detected | 3 | 9 | 22 | Not detected |
| Tensile physical properties | Tensile strength [MPa] | | 3 | 5 | 10 | 11 | 16 | 33 | 35 |
| | Tensile elongation [%] | | 88 | 143 | 209 | 262 | 263 | 709 | 544 |
| | Elastic modulus (MPa) | | 6 | 6 | 4 | 5 | 7 | 152 | 8 |
| Elastic recovery rate [%] | | | - | - | 88 | 66 | 39 | Not measured due to whitening | 40 |
| Compression set [%] | | | 1 | 1 | 1 | 3 | 3 | 56 | 80 |

Polyol

A1 to A5: the compounds (A1) to (A5) prepared in the Preparation Examples were used
A6: PLACCEL 240CP (available from Daicel Corporation, caprolactone adduct of neopentyl glycol, number average molecular weight 4000)
A7: PLACCEL 220N (available from Daicel Corporation, caprolactone adduct of ethylene glycol, number average molecular weight 2000)
Polyisocyanate
B: Millionate MT (available from Tosoh Corporation, polyisocyanate, NCO content 33.6%)

Chain extender

C: 1,4-butanediol (available from Mitsubishi Chemical Corporation)

To summarize the above, configurations and variations of the present disclosure are additionally described below.

[1] A composition for a polyurethane elastomer, the composition containing:

a polyol compound (A) containing a compound having three or more groups represented by Formula (1) per molecule and having an average molecular weight per hydroxyl group of 1000 or greater and 2000 or less; and
a polyisocyanate compound (B).

[2] The composition for a polyurethane elastomer according to [1], wherein the polyol compound (A) is a compound represented by Formula (a) or Formula (b).
[3] The composition for a polyurethane elastomer according to [1] or [2], wherein the polyol compound (A) has a number average molecular weight of 4000 to 8000.
[4] The composition for a polyurethane elastomer according to any one of [1] to [3], wherein the polyisocyanate compound (B) is an aromatic diisocyanate compound.
[5] The composition for a polyurethane elastomer according to any one of [1] to [4], the composition containing a compound (C) having a molecular weight of 200 or less and having two or more groups reactive with an isocyanate group, wherein a content of the compound (C) is from 1 to 10 parts by weight per 100 parts by weight of the polyol compound (A).
[6] The composition for a polyurethane elastomer according to [5], wherein the compound (C) is at least one compound selected from a polyol, a polyamine, or an amino alcohol.
[7] The composition for a polyurethane elastomer according to [5], wherein the compound (C) is an aliphatic diol having from 2 to 10 carbons.
[8] The composition for a polyurethane elastomer according to any one of [1] to [7], wherein a proportion of a total of the polyol compound (A) and the aliphatic diol having from 2 to 10 carbons is 70 wt.% or more (preferably 80 wt.% or more, particularly preferably 90 wt.% or more, most preferably 95 wt.% or more, and especially preferably 99 wt.% or more) in a total amount of polyols contained in the composition.
[9] A polyurethane elastomer having a soft segment containing an addition polymerization product of:

a polyol compound (A) having three or more groups represented by Formula (1) per molecule and having an average molecular weight per hydroxyl group of 1000 or greater and 2000 or less; and
a polyisocyanate compound (B).

[10] The polyurethane elastomer according to [9], further having a hard segment containing an addition polymerization product of:

a polyisocyanate compound (B); and
a compound (C) having a molecular weight of 200 or less and having two or more groups reactive with an isocyanate group.

[11] The polyurethane elastomer according to [10], wherein a proportion of the soft segment and the hard segment is 50 wt.% or more in a total weight of the polyurethane elastomer.

[12] The polyurethane elastomer according to any one of [9] to [11], having no melting point.

[13] The polyurethane elastomer according to any one of [9] to [11], wherein an enthalpy of fusion determined by performing DSC measurement under conditions below is 15 [J/g] or less at the time of a second temperature increase: DSC measurement conditions:

rate of temperature increase and decrease: 5°C/min; and
temperature increase and decrease program: the temperature is decreased from room temperature to -80°C, kept at -80°C for 1 minute, then increased to 220°C, kept at 220°C for 1 minute, then decreased to -80°C, kept at -80°C for 1 minute, and then increased to 220°C.

[14] The polyurethane elastomer according to according to any one of [9] to [13], having a Shore A hardness of 75 or less under conditions of 23°C and 50% Rh.

[15] The polyurethane elastomer according to any one of [9] to [14], having a compression set determined by a method below of 10% or less:
method of calculating compression set:
a right circular cylindrical test piece having a thickness of 12.5 ± 0.5 mm and a diameter of 29.0 ± 0.5 mm is prepared from the polyurethane elastomer; the test piece is subjected to a test in which the test piece is held in a state of being pressed to reduce the thickness by 25% in an atmosphere of 70°C for 22 hours; and the compression set is calculated from a formula below:

compression set = [(test piece thickness before test - test piece thickness after test) / (test piece thickness before test - 9.38)] x 100

Industrial Applicability

The composition for a polyurethane elastomer of the present disclosure produces a polyurethane elastomer that is soft and has excellent elongation, restorability, and mechanical strength by curing.

The composition for a polyurethane elastomer can be widely used in various industrial rolls, sealing materials, conveyor belts, medical devices, shoe soles, tires, shock absorbers, and sports and leisure goods.

## Claims

**1.** A composition for a polyurethane elastomer, the composition comprising:
a polyol compound (A) comprising

a compound comprising three or more groups represented by Formula (1) per molecule and having an average molecular weight per hydroxyl group of 1000 or greater and 2000 or less,

[Chem. 1]

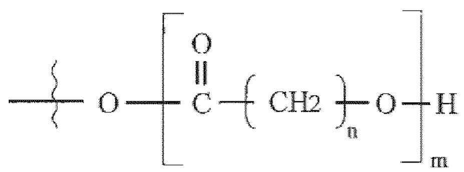

(1)

where n represents an integer of 2 to 6, and m represents an integer of 6 to 20; and
a polyisocyanate compound (B).

**2.** The composition for a polyurethane elastomer according to claim 1, wherein the polyol compound (A) is a compound represented by Formula (a) or Formula (b):

[Chem. 2]

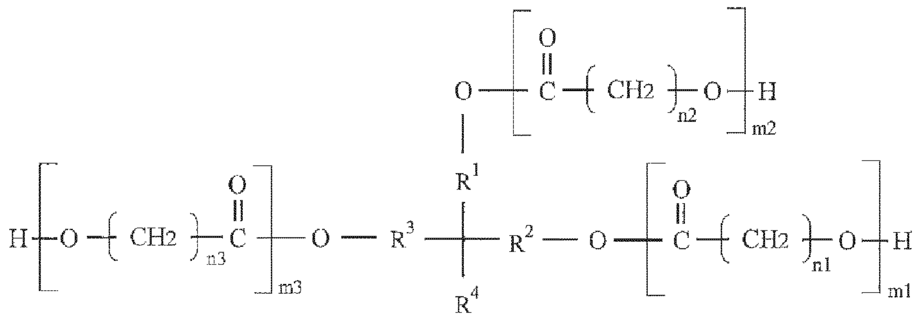

(a)

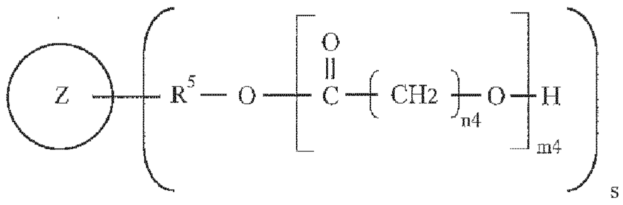

(b)

where n1 to n4 are identical to or different from one another and represent an integer of 3 to 6; m1 to m4 are identical to or different from one another and represent an integer of 6 to 20; $R^1$ to $R^3$ and $R^5$ are identical to or different from one another and represent a single bond or a divalent hydrocarbon group; $R^4$ represents a hydrogen atom, a hydroxyl group, or a monovalent hydrocarbon group that may comprise a group represented by Formula (1); and ring Z represents a residue obtained by removal of s hydrogen atoms from a structural formula of an alicyclic hydrocarbon ring, an aromatic hydrocarbon ring, or a heterocyclic ring, and s represents an integer of 3 or more.

**3.** The composition for a polyurethane elastomer according to claim 1 or 2, the composition comprising: a compound (C) having a molecular weight of 200 or less and comprising two or more groups reactive with an isocyanate group, wherein a content of the compound (C) is from 1 to 10 parts by weight per 100 parts by weight of the polyol compound (A).

**4.** A polyurethane elastomer comprising a soft segment comprising an addition polymerization product of: a polyol compound (A) comprising

three or more groups represented by Formula (1) per molecule and having an average molecular weight per hydroxyl group of 1000 or greater and 2000 or less,

[Chem. 3]

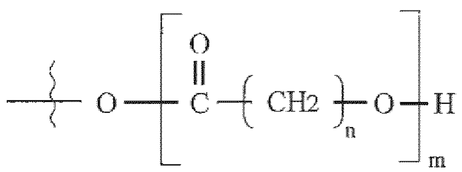

(1)

where n represents an integer of 2 to 6, and m represents an integer of 6 to 20; and
a polyisocyanate compound (B).

**5.** The polyurethane elastomer according to claim 4, further comprising a hard segment comprising an addition polymerization product of:

a polyisocyanate compound (B); and
a compound (C) having a molecular weight of 200 or less and comprising two or more groups reactive with an

isocyanate group.

**6.** The polyurethane elastomer according to claim 4 or 5, having no melting point.

**7.** The polyurethane elastomer according to claim 4 or 5, wherein an enthalpy of fusion determined by performing DSC measurement under conditions below is 15 [J/g] or less at the time of a second temperature increase:
DSC measurement conditions:

rate of temperature increase and decrease: 5°C/min; and
temperature increase and decrease program: the temperature is decreased from room temperature to -80°C, kept at -80°C for 1 minute, then increased to 220°C, kept at 220°C for 1 minute, then decreased to -80°C, kept at -80°C for 1 minute, and then increased to 220°C.

**8.** The polyurethane elastomer according to claim 4 or 5, having a Shore A hardness of 75 or less under conditions of 23°C and 50% Rh.

**9.** The polyurethane elastomer according to claim 4 or 5, having a compression set determined by a method below of 10% or less:
method of calculating compression set:
a right circular cylindrical test piece having a thickness of 12.5 ± 0.5 mm and a diameter of 29.0 ± 0.5 mm is prepared from the polyurethane elastomer; the test piece is subjected to a test in which the test piece is held in a state of being pressed to reduce the thickness by 25% in an atmosphere of 70°C for 22 hours; and the compression set is calculated from a formula below:

compression set = [(test piece thickness before test - test piece thickness after test) / (test piece thickness before test - 9.38)] x 100.

## INTERNATIONAL SEARCH REPORT

International application No.
**PCT/JP2022/034247**

### A. CLASSIFICATION OF SUBJECT MATTER

***C08G 18/42***(2006.01)i; ***C08G 18/30***(2006.01)i
FI: C08G18/42 069; C08G18/30

According to International Patent Classification (IPC) or to both national classification and IPC

### B. FIELDS SEARCHED

Minimum documentation searched (classification system followed by classification symbols)

C08G18/00-18/87

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 54-130699 A (SANYO CHEMICAL INDUSTRIES, LTD.) 11 October 1979 (1979-10-11) claims, page 6, upper right column, line 11 to lower right column, line 5, examples | 1-9 |
| X | WO 2016/125893 A1 (TOSOH CORP.) 11 August 2016 (2016-08-11) claims, paragraphs [0043]-[0045], manufacturing examples 3, 6, example 2, comparative example 5 (“table 1”) | 1, 4 |
| A | | 2, 3, 5-9 |
| X | JP 55-5971 A (SANYO CHEMICAL INDUSTRIES, LTD.) 17 January 1980 (1980-01-17) claims, page 2, lower left column, line 2 from the bottom to page 3, lower left column, line 11, page 4, upper right column, lines 4-8, example 2 | 1-9 |
| A | JP 2012-251056 A (NOK CORP.) 20 December 2012 (2012-12-20) claims | 1-9 |
| A | CN 102532464 A (YANTAI MIRACLL CHEMICALS CO., LTD.) 04 July 2012 (2012-07-04) claims, examples | 1-9 |
| A | JP 2020-90555 A (UBE IND., LTD.) 11 June 2020 (2020-06-11) claims, examples | 1-9 |

☐ Further documents are listed in the continuation of Box C.  ☑ See patent family annex.

* Special categories of cited documents:
“A” document defining the general state of the art which is not considered to be of particular relevance
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **08 November 2022** | **22 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/034247**

| Patent document cited in search report | Publication date (day/month/year) | Patent family member(s) | Publication date (day/month/year) |
|---|---|---|---|
| JP 54-130699 A | 11 October 1979 | US 4271217 A<br>claims, column 6, line 35 to column 7, line 3, examples | |
| WO 2016/125893 A1 | 11 August 2016 | CN 107207901 A<br>KR 10-2017-0115566 A | |
| JP 55-5971 A | 17 January 1980 | (Family: none) | |
| JP 2012-251056 A | 20 December 2012 | (Family: none) | |
| CN 102532464 A | 04 July 2012 | (Family: none) | |
| JP 2020-90555 A | 11 June 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021149597 A
- JP H07242725 A